# EUROPÄISCHE PATENTANMELDUNG

(11) **EP 1 968 290 A2**
(43) Veröffentlichungstag der Anmeldung: **10.09.2008**
(21) Anmeldenummer: 08003255.0
(22) Anmeldetag: 22.02.2008
(51) Int. Cl.: H04M 1/725, H04L 29/06, G06F 17/30

(54) **Konfiguration von Datendiensten**

(30) Priorität: 05.03.2007 DE 102007010510
(71) Anmelder: Giesecke & Devrient GmbH, 81677 München (DE)
(72) Erfinder: Schönberner, Rainer, 85604 Zorneding (DE)

(57) **Zusammenfassung**

Die Erfindung betrifft ein Verfahren auf einem portablen Datenträger (10) zum Konfigurieren eines von einem Datendienstanbieter angebotenen Datendienstes. Dabei empfängt (200) der portable Datenträger (10) ein von einem Datendienstanbieter gesendetes Konfigurationsverzeichnis, welches einen Datendienst betreffende Konfigurationsoptionen umfasst. Der portable Datenträger (10) selektiert (300) eine Konfigurationsoption aus dem Konfigurationsverzeichnis und sendet (350) die selektierte Konfigurationsoption an den Datendienstanbieter, um die selektierte Konfigurationsoption bei dem Datendienstanbieter einzurichten (400). Daraufhin empfängt (600) der portable Datenträger (10) die entsprechenden Datendienstinformationen oder ein Hinweissignal von dem Datendienstanbieter, welches eine dem Datendienstanbieter vorliegende und der eingerichteten Konfigurationsoption entsprechende Datendienstinformation betrifft, und der portable Datenträger (10) fordert (750) die Datendienstinformation in Abhängigkeit von einer Bewertung (700) des Hinweissignals bei dem Datendienstanbieter an. Die Datendienstinformation wird zusammen mit Darstellungselementen (43), die auf dem Datenträger (10) vorliegen, auf einer Ausgabeeinrichtung dargestellt.

## Beschreibung

Die Erfindung betrifft ein Verfahren auf einem portablen Datenträger zum Konfigurieren von Datendiensten sowie einen derartigen Datenträger.

Elektronische Datendienste verschiedenster Art und installiert auf unterschiedlichen Kommunikationssystemen sind bekannt. Derartige Datendienste bieten einem Nutzer auf Anfrage oder automatisch Informationen und Inhalte zu beliebigen Themen und in vielfältiger Form an, beispielsweise Nachrichten über Politik, Wirtschaft, Sport und dergleichen. Gleichfalls gibt es Wetter- oder Zeitansagen etc., aber auch Portale, die multimediale Daten wie Filme, Musik etc. in elektronischer Form, beispielsweise als mp3-Dateien, bereitstellen, z.B. zum Herunterladen im Internet.

Technologien wie RSS ("Really Simple Syndication") oder ATOM, eine Erweiterung und ein potentieller Nachfolger von RSS, ermöglichen es einem Nutzer, mit Hilfe einer so genannten Aggregator-Applikation (auch "Feedreader" genannt) automatisch und in regelmäßigen Abständen neue Inhalte aus dem Internet herunterzuladen oder zu "abonnieren". Diese Inhalte werden "Newsfeed" (etwa "Nachrichteneinspeisung") oder "Feed" genannt und sind entsprechend maschinenlesbar aufbereitet. Auf diese Weise werden dem Nutzer stets auf einfache Weise die neuesten und für ihn relevanten Informationen oder Inhalte bereitgestellt. Dies können Text-Inhalte sein, wie beispielsweise Nachrichten, aber auch multimediale Inhalte, wie Musikdateien und dergleichen.

Ein derartiger "Newsfeed" kann aus einer XML-Datei bestehen, die im Allgemeinen den Titel des "Newsfeeds" umfasst, die Adresse der Webseite, auf der die entsprechenden Beiträge des "Newsfeeds" bereitgestellt sind, eine kurze Beschreibung des "Newsfeeds", also z.B. seine thematische Ausrichtung, sein Erstellungsdatum und dergleichen. Weiterhin und vornehmlich sind die Beiträge des "Newsfeeds" in analog strukturierter Form aufbereitet. Zu jedem Beitrag gibt es im Allgemeinen einen Titel, eine kurze Zusammenfassung, Autorenangaben und dergleichen. Der Inhalt eines Beitrags, beispielsweise eine Nachricht auf einer Nachrichtenseite, wird oft als reiner Inhalt (jargonsprachlich "Content" genannt) bereitgestellt, umfasst also im Wesentlichen Textdaten - gegebenenfalls ergänzt durch inhaltsbezogene Graphik- oder Multimediaelemente, wie z.B. Illustrationen oder Sprachbeiträge,- und keinerlei Layout, Navigation, Formatierungen oder sonstige Zusatzinformation.

Der Nutzer kann eine Aggregator-Applikation verwenden, um die für ihn relevanten Titel und Zusammenfassungen der Beiträge der abonnierten "Newsfeeds" automatisch herunterzuladen, beispielsweise auf seinen Computer, und dort geeignet angeordnet anzeigen zu lassen. Hierzu genügt jeweils ein Hyperlink auf die Web-Adresse des entsprechenden "Newsfeeds". Auf diese Weise muss der Nutzer nicht die für ihn relevanten Web-Seiten besuchen, um von dem Datendienst neu eingestellte Informationen zu erkennen, sondern kann sich anhand der angeordneten Titel und Zusammenfassungen der neuen Beiträge einen schnellen Überblick verschaffen. Wünscht er zu einem Beitrag weitere Information, kann er, beispielsweise über einen Hyperlink, der Teil der Zusammenfassung des Beitrags ist, den vollständigen Beitrag des Datendienstes beziehen.

Bei Newsfeed-Verfahren für portable Geräte, z.B. für Telekommunikationsendgeräte, die über eine Funknetzverbindung mit einer Datendienstvorrichtung des Datendienstes verbunden sind, werden die Daten eines angeforderten Beitrags zusammen mit den gegebenenfalls integrierten multimedialen Daten vollständig über die Funknetzverbindung übertragen.

In diesem Zusammenhang offenbart die WO 03/001772 A2 eine SIM-Mobilfunkkarte, mit deren Hilfe ein Nutzer in einem Rundruf-Verfahren ("Broadcast") ausgesendete multimediale Daten empfangen und speichern kann, wenn er sich in Reichweite einer entsprechenden Sendestation befindet. Dazu sind zu verschiedenen Kanälen zur Verbreitung der Daten jeweils verschiedene SIM-Mobilfunkkarten zum Empfangen der auf den jeweiligen Kanälen gesendeten Daten vorgesehen.

Die WO 2006/061682 A1 offenbart ein Verfahren zum Austauschen vom Daten oder Inhalten, die an ein Telekommunikationsendgerät angepasst sind, zwischen einem Telekommunikationsendgerät und einem lokalen Netzwerk, beispielsweise zum Vernetzen von verschiedenen elektronischen Geräten in einem Haushalt. Dabei werden die Daten oder Inhalte von einer Datendienstvorrichtung, die mit dem lokalen Netz vernetzbar ist, über das lokale Netz angeboten. Das Telekommunikationsendgerät kann dann bestimmte angebotene Daten oder Inhalte bei der Datendienstvorrichtung anfordern, welche daraufhin die angeforderten Daten oder Inhalte dem Telekommunikationsendgerät zur Verfügung stellt.

Die DE 10 2004 058 747 A1 offenbart eine SIM-Mobilfunkkarte in einem Telekommunikationsendgerät, auf welcher Filterkriterien gespeichert sind und welche eingerichtet ist, bei definierten Ereignissen, beispielsweise bei Einschalten des Telekommunikationsendgeräts, diese Filterkriterien an eine Steuereinrichtung des Telekommunikationsendgeräts zu übermitteln. Die Steuereinrichtung kann dann, beim Eintreffen eines Signals, welches das Vorliegen einer abrufbaren Nachricht anzeigt, anhand der von der SIM-Mobilfunkkarte übermittelten Filterkriterien entscheiden, die Nachricht abzurufen oder nicht.

In der WO 03/084165 A1 ist ein Verfahren zur Information eines Nutzer eines Telekommunikationsendgeräts über ihm aktuell über ein Mobilfunknetz zur Verfügung stehenden Datendienste offenbart, wobei eine Liste dieser Datendienste von einem Mobilfunknetz-Dienstserver automatisch erstellt wird und über ein Mobilfunknetz dem Telekommunikationsendgerät zur dortigen Speicherung gesendet wird.

Aufgabe der vorliegenden Erfindung ist es, ein Verfahren bereitzustellen, mit dem ein Datendienst von einem portablen Datenträger flexibel und effizient genutzt werden kann.

Diese Aufgabe wird durch ein Verfahren mit den Merkmalen der nebengeordneten Ansprüche gelöst. Vorteilhafte Ausgestaltungen und Weiterbildungen sind in den davon abhängigen Ansprüchen angegeben.

Ein portabler Datenträger empfängt zum Konfigurieren eines von einem Datendienstanbieter angebotenen Datendienstes ein von einer Datendienstvorrichtung des Datendienstanbieters gesendetes Konfigurationsverzeichnis, welches den Datendienst betreffende Konfigurationsoptionen umfasst. Der portable Datenträger selektiert aus dem Konfigurationsverzeichnis eine Konfigurationsoption und richtet die selektierte Konfigurationsoption für den Datendienst bei dem Datendienstanbieter dadurch ein, dass er die selektierte Konfigurationsoption an den Datendienstanbieter sendet. Falls der Datenträger daraufhin ein Hinweissignal von der Datendienstvorrichtung des Datendienstanbieters empfängt, welches eine dem Datendienstanbieter vorliegende und der eingerichteten Konfigurationsoption entsprechende DatendienstInformation betrifft, kann der portable Datenträger in Abhängigkeit einer Bewertung des Hinweissignals bzw. der Datendienstinformation, auf die das Hinweissignal hinweist, die Datendienstinformation bei dem Datendienstanbieter anfordern. Alternativ erhält der tragbare Datenträger die Datendienstinformation unmittelbar ohne ein Anfordern nach Erhalten eines Hinweissignals.

Das Verfahren wird auf einem portablen Datenträger ausgeführt, welcher einen Speicher, einen Prozessor und eine Datenkommunikationsschnittstelle zur Kommunikation mit einer Datendienstvorrichtung umfasst sowie eine in dem Speicher gespeicherte Konfigurationsapplikation, die eingerichtet ist, die Konfiguration des Datendienstes selbständig durchzuführen.

Mit Hilfe des erfindungsgemäßen Verfahrens ist es möglich, auf einem portablen Datenträger aus einem Angebot an unterschiedlichen Datendiensten, repräsentiert durch ein Konfigurationsverzeichnis, spezielle Datendienstangebote, die jeweils eine bestimmte Gruppe von Datendienstangeboten betreffen, zu selektieren und die selektierte Auswahl, repräsentiert durch eine der Konfigurationsoptionen des Konfigurationsverzeichnisses, bei dem Datendienstanbieter einzurichten. Danach kann der Datenträger Hinweissignale auf Datendienstinformationen empfangen, die der selektierten Konfigurationsoption entsprechen, also etwa einer bestimmten Thematik oder Nachrichtentyp.

Die getroffene Auswahl muss bei dem erfindungsgemäßen Verfahren insbesondere nicht bei jeder erneuten Nutzung des Datendienstes wiederholt werden, wodurch ein direkter Zugriff auf den Datendienst erleichtert wird. Das Empfangen eines Hinweissignals, das eine dem Datendienstanbieter im Hinblick auf den selektierten Datendienst vorliegende Datendienstinformation betrifft, informiert den Nutzer direkt über neue Nachrichten zu dem über die eingerichtete Konfigurationsoption selektierten Datendienst. Gleichwohl ist die Möglichkeit gegeben, die Datendienstinformation, auf welche das Hinweissignal hinweist, in verschiedener Weise zu behandeln. Aufgrund des Hinweissignals kann die dahinterstehende Datendienstinformation vorab bewertet werden, und somit eine aktive Entscheidung getroffen werden, ob sie über die Datendienstvorrichtung direkt oder später angefordert werden soll. Es besteht somit eine weitere Konfigurationsmöglichkeit, welche eine bei der Datendienstvorrichtung vorliegende Datendienstinformationen betrifft, beispielsweise im Laufe der Zeit neu eingestellte Informationen.

Im Hinblick auf die begrenzten Ressourcen eines portablen Datenträgers und die möglicherweise begrenzte Bandbreite einer kabellosen Kommunikationsverbindung zu einer Datendienstvorrichtung stellt das erfindungsgemäße Verfahren durch die flexible Möglichkeit der Konfiguration eines Datendienstes eine effiziente Lösung dar, insbesondere, weil nur solche Datendienstinformationen von dem Datenträger empfangen werden, die auch tatsächlich gewünscht sind. Durch die Einrichtung von Konfigurationsoptionen können die erwünschten Datendienstinformationen vorab hinreichend genau spezifiziert werden.

Unter Datendiensten sind im Sinne der vorliegenden Erfindung jede Art von elektronisch angebotenen Datendiensten zu verstehen, unabhängig von dem Datendienstanbieter, der den entsprechenden Datendienst zu Verfügung stellt, unabhängig von den Nutzungsbedingungen des Datendienstes, der unterstützen Technologie des Datendienstes, dem Übertragungsweg und dem Kommunikationsprotokoll zur Bereitstellung des Datendienstes, der Art der durch den Datendienst bereitgestellten Daten und dergleichen.

Vorzugsweise werden Hinweissignale und die gegebenenfalls von dem Datenträger bei über die Datendienstvorrichtung empfangenen Datendienstinformation von der Konfigurationsapplikation in dem Speicher des portablen Datenträger gespeichert. Auf diese Weise können Datendienstinformationen zu empfangenen Hinweissignalen auch noch später, also nicht direkt bei Eingang des Hinweissignals, bei der Datendienstvorrichtung angefordert werden. Auch ein mehrmaliges Nutzen von Datendienstinformation ohne erneutes Anfordern derselben ist dadurch möglich. Ein Löschen von gespeicherten Hinweissignalen und Datendienstinformationen durch die Konfigurationsapplikation ist gleichfalls möglich, um Ressourcen des portablen Datenträgers effizient zu nutzen.

Neben der flexiblen und effizienten Konfiguration eines Datendienstes durch den Datenträger stellt der Datenträger vorzugsweise zur Darstellung der auf Anforderung empfangenen und/ oder gespeicherten Datendienstinformationen mittels einer Ausgabeeinrichtung Darstellungselemente bereit. Diese Darstellungselemente können beispielsweise textueller, strukturierender, graphischer, audiovisueller Natur sein oder dergleichen, also beispielsweise als e-Mail-Adressen, Hyperlinks, Frames, Icons, Hintergrundbilder, Sounds oder Audioelemente, Werbebanner oder dergleichen ausgebildet sein. Diese Darstellungselemente sind vorzugsweise bereits vor einem Empfang oder einer Anforderung von Datendienstinformationen bei einem entsprechend konfigurierten Datendienst auf dem portablen Datenträger gespeichert, beispielsweise zum Zeitpunkt der Ausgabe des Datenträgers an den Nutzer. Gleichwohl können die Darstellungselemente auch in regelmäßigen oder unregelmäßigen Abständen durch eine Datenkommunikation mit einer Datendienstvorrichtung aktualisiert werden. Ist der portable Datenträger beispielsweise als (U)SIM-Mobilfunkkarte ausgebildet, so kann über eine Luftschnittstelle (OTA, "over the air") eine Aktualisierung der Darstellungselemente auf dem Datenträger durch einen Mobilfunkanbieter erfolgen, der dann vorzugsweise gleichzeitig ein Datendienstanbieter sein kann.

Die Darstellungselemente repräsentieren vorzugsweise solche graphische oder andere multimediale Elemente, die nicht unmittelbar mit dem Inhalt einer Datendienstinformation in Zusammenhang stehen und deshalb getrennt von dieser von den Datenträger bzw. einer entsprechenden Darstellungsapplikation des Datenträgers bereitgestellt werden.

Zu einer darzustellenden, in dem Speicher des portablen Datenträgers gespeicherten Datendienstinformation werden bestimmte Darstellungselemente aus der Menge aller Darstellungselemente von der Darstellungsapplikation ausgewählt. Diese Auswahl kann abhängig von unterschiedlichen Parametern durchgeführt werden, beispielsweise in Abhängigkeit von der Ausgabeeinrichtung, der Art und dem Inhalt der darzustellenden Datendienstinformation, von Vorgaben des Datendienstanbieters, von Vorgaben des Nutzers des portablen Datenträgers, von Vorgaben des Datenträgers selbst und dergleichen.

Um die ausgewählten Darstellungselemente zusammen mit der Datendienstinformation auf der Ausgabeeinrichtung darstellen zu können, werden Steuerinformationen in die gespeicherte Datendienstinformation integriert, die eine Anordnung der ausgewählten Darstellungselemente in Relation zu der Datendienstinformation vorgeben. Die Datendienstinformation wird dann zusammen mit den ausgewählten Darstellungselementen mittels einer Ausgabeeinrichtung, beispielsweise einem Display eines Telekommunikationsendgeräts, in welches der portable Datenträger in Form einer (U)SIM-Mobilfunkkarte integriert ist, in der Weise dargestellt, die durch die Steuerinformation vorgegeben wird.

Auf diese Weise ist es möglich, eine Datendienstinformation in effizienter Weise ohne Zusatzinformation zur Strukturierung und Darstellung als reine Textnachricht zu empfangen, und diese mittels der Integration von Steuerinformation, die auf ausgewählte, auf den Datenträger bereits vorliegende audiovisuelle oder andere Darstellungselemente verweist, strukturiert und optisch optimiert auf der Ausgabeeinrichtung darzustellen, ohne zu jeder Datendienstinformation die entsprechenden ausgewählten Darstellungselemente zusammen mit der Datendienstinformation übertragen zu müssen. Daraus resultiert einerseits ein deutlich reduziertes zu übertragendes Datenvolumen. Darüber hinaus ist es möglich, die ausgewählten Darstellungselemente, wie auch ihre Anordnung in Relation zu der Datendienstinformation, an verschiedene vorgegebene oder einzurichtende Parameter - z.B. die oben genannten - anzupassen, so dass andererseits eine besonders flexible und adaptierte Darstellung möglich ist. Gleichzeitig kann die Datendienstinformation durch die Darstellungselemente auch in ihrem Informationsgehalt ergänzt oder erweitert werden, beispielsweise mittel Hyperlinks zu ergänzenden Inhalten auf anderen Medien oder inhaltsangepasste Werbung.

Es werden also nicht nur diejenigen Inhalte dargestellt, die über einen Datendienst bezogen werden, sondern durch eine weitgehende Trennung von übertragenen Inhalten der Datendienstinformation einerseits und Darstellungselementen zur Unterstützung und Anreicherung der Darstellung andererseits ist es möglich, die Datendienstinformationen durch ausgewählte Darstellungselemente in inhaltlich und strukturell erweiterter und für den Nutzer und/oder die Ausgabeeinrichtung optimierter Form darzustellen, wobei gleichzeitig das dazu notwendige Datenübertragungsvolumen minimiert wird.

Ein entsprechend eingerichteter Datenträger umfasst demgemäß in seinem Speicher bereitgestellte Darstellungselemente der vorstehend beschriebenen Art und eine auf dem Prozessor des Datenträgers ausführbare Darstellungsapplikation, die eingerichtet ist, die vorstehend beschriebene Darstellung einer Datendienstinformation auf einer Ausgabeeinrichtung aktiv durchzuführen oder zumindest zu bewirken. Falls es sich bei dem Datenträger um eine (U)SIM-Mobilfunkkarte handelt, bewirkt die Darstellungsapplikation die Darstellung der Datendienstinformation auf dem Display eines verbundenen Telekommunikationsendgeräts durch entsprechende Anweisungen und Kommunikationen an dieses Telekommunikationsendgerät. Die Darstellungsapplikation kann auch in der Konfigurationsapplikation integriert sein, z.B. in Form eines Webservers des portablen Datenträgers.

Das Verfahren zum Konfigurieren eines Datendienstes kann weitere Schritte umfassen. Vor dem Empfangen des Konfigurationsverzeichnisses kann der portable Datenträger von einem Datendienstanbieter zumindest ein Selektionsverzeichnis empfangen. Das Selektionsverzeichnis umfasst dabei entweder Konfigurationsverzeichnisoptionen, die bei dem Datendienstanbieter vorliegende Konfigurationsverzeichnisse betreffen, oder Selektionsverzeichnisoptionen, die bei dem Datendienstanbieter vorliegende weitere Selektionsverzeichnisse betreffen.

Umfasst das Selektionsverzeichnis Konfigurationsverzeichnisoptionen, so selektiert die Konfigurationsapplikation eine Konfigurationsverzeichnisoption und sendet die selektierte Konfigurationsverzeichnisoption an die Datendienstvorrichtung. Daraufhin empfängt die Konfigurationsapplikation über die Datenkommunikationsschnittstelle des Datenträgers ein die selektierte Konfigurationsverzeichnisoption betreffendes Konfigurationsverzeichnis von dem Datendienstanbieter. In dem Fall, in dem das Selektionsverzeichnis Selektionsverzeichnisoptionen umfasst, selektiert die Konfigurationsapplikation eine Selektionsverzeichnisoption und sendet die selektierte Selektionsverzeichnisoption an den Datendienstanbieter. Daraufhin empfängt die Konfigurationsapplikation über die Datenkommunikationsschnittstelle des Datenträgers ein die selektierte Selektionsverzeichnisoption betreffendes weiteres Selektionsverzeichnis von dem Datendienstanbieter.

Auf diese Weise wird es ermöglich, in einem hierarchisch aufgebauten Datendienstangebot eines Datendienstes mittels diese thematisch-hierarchische Struktur wiedergebenden Selektionsverzeichnissen mit Selektionsverzeichnisoptionen zu Konfigurationszwecken zu navigieren. Durch das Selektieren der Selektionsverzeichnisoptionen und der Konfigurationsverzeichnisoptionen und das Empfangen der entsprechenden Selektionsverzeichnisse oder Konfigurationsverzeichnisse, beispielsweise aus einer niedrigeren Hierarchieebene, ist es möglich, beispielsweise Datendienste, die thematisch hierarchisch gegliedert von einem Datendienstanbieter angeboten werden, schnell und damit effektiv auf relevante Angebote zu durchsuchen und entsprechend gefundene Datendienste für den Datenträger einzurichten. Dadurch wird eine noch spezifischere Definitionsmöglichkeit der erwünschten Datendienstinformationen erreicht, mit der Folge einer weiteren Entlastung der Kommunikationsverbindung zwischen Datenträger und Datendienstvorrichtung.

Es ist möglich, einmal eingerichtete Datendienste zu Widerrufen und damit deren Einrichtung bei dem Datendienstanbieter aufzuheben, beispielsweise wenn ein Datendienst für den Nutzer nicht mehr relevant ist oder wenn ein Datendienst von dem Nutzer zeitweilig nicht genutzt werden kann und durch das Widerrufen eventuell anfallenden Kosten gespart werden können. Dazu sendet die Konfigurationsapplikation ein Widerrufssignal, das den eingerichteten Datendienst betrifft, an die Datendienstvorrichtung, , woraufhin diese die eingerichtete Konfigurationsoption aufhebt. Ein erneutes Einrichten derselben Konfigurationsoption zu einem Datendienst ist selbstverständlich möglich.

Die von dem Datendienstanbieter gesendeten Selektions- und Konfigurationsverzeichnisse sind von dem Datendienstanbieter veränderbar, beispielsweise abhängig von dem Angebot der einem Nutzer aktuell bereitstellbaren Datendienste. Aktualisierte Selektions- und Konfigurationsverzeichnisse können an den portablen Datenträger gesendet werden, um der Konfigurationsapplikation die Möglichkeit zu geben, eventuell weitere Datendienste zur Nutzung zu Konfigurieren.

Im Allgemeinen wird der portable Datenträger in regelmäßigen Abständen, z.B. täglich, ein Hinweissignal von der Datendienstvorrichtung empfangen, das eine dem Datendienstanbieter vorliegende und der eingerichteten Konfigurationsoption entsprechende Datendienstinformation betrifft. Das Hinweissignal kann aber auch in unregelmäßigen Abständen gesendet werden, beispielsweise immer genau dann, wenn eine entsprechende neue Datendienstinformation vorliegt. Das Hinweissignal kann z.B. die entsprechende Datendienstinformation, auf deren Vorliegen es hinweist, knapp beschreiben, beispielsweise mit einer Angabe eines Titels, einer Kurzzusammenfassung, einer Autorenangabe und dergleichen. Aufgrund dieser und anderer Information, die das Hinweissignal umfassen kann, kann die Bewertung des Hinweissignals zum eventuellen Anfordern der Datendienstinformation durch die Konfigurationsapplikation unterstützt werden. Eine Bewertung eines Hinweissignals wird vorzugsweise von einem Nutzer des Datenträgers mit Hilfe einer Eingabeeinrichtung über die Datenkommunikationsschnittstelle des Datenträgers in den Datenträger eingebracht und von der Konfigurationsapplikation verwendet. Die Konfigurationsapplikation kann aber auch eigene Bewertungsregeln zum Bewerten eines Hinweissignals anwenden.

Vorzugsweise werden Daten zwischen dem Datendienstanbieter und dem portablen Datenträger verschlüsselt übertragen. Dazu ist die Konfigurationsapplikation eingerichtet, von dem Datendienstanbieter empfangene verschlüsselte Daten zu entschlüsseln und Daten vor dem Senden an den Datendienstanbieter entsprechend zu verschlüsseln. Die Verschlüsselung kann je nach Anwendungszusammenhang auf verschiedene Arten erfolgen, beispielsweise mittels eines jeweils für eine Datenübertragung ausgehandelten Sitzungsschlüssels oder mittels eines einmalig vereinbarten und wieder verwendeten geheimen Schlüssels, z.B. für ein symmetrisches Verschlüsselungsverfahren.

Der Datendienstanbieter kann beispielsweise ein Mobilfunkanbieter sein und das Verfahren zum Konfigurieren eines Datendienstes kann auf einem als (U)SIM-Mobilfunkkarte ausgebildeten portablen Datenträger, der in ein Telekommunikationsendgerät integriert ist, durchgeführt werden. Dabei kann der Mobilfunkanbieter beispielsweise auf einem eigenen Server im Internet verfügbare Datendienste zusammen mit eigenen, anbieterspezifischen Datendiensten zu einem Datendienstangebot bündeln. Dieses Datendienstangebot kann beispielsweise abonnierbare RSS-/ATOM-"Newsfeeds" umfassen. Das von dem Mobilfunkanbieter an die Mobilfunkkarte gesendete Selektions- oder Konfigurationsverzeichnis umfasst die von dem Mobilfunkanbieter gebündelten Datendienste zur Auswahl für die Konfigurationsapplikation auf der Mobilfunkkarte. Das Empfangen der Selektions- und Konfigurationsverzeichnisse von dem Datendienstanbieter über die Datendienstvorrichtung durch die Mobilfunkkarte und das Senden einer selektierten Selektions- oder Konfigurationsoption sowie eines Widerrufssignals von der Mobilfunkkarte an die Datendienstvorrichtung des Mobilfunkanbieters kann beispielsweise mittels SMS erfolgen. Auch andere Kommunikationsdienste und verschiedene Kommunikationsprotokolle zur Kommunikation zwischen der Mobilfunkkarte und dem Mobilfunkanbieter sind möglich. So kann beispielsweise das Anfordern einer Datendienstinformation durch die Konfigurationsapplikation bei dem Datendienstanbieter über das WAP- oder das http-Kommunikationsprotokoll erfolgen, indem z.B. zum Folgen eines Hyperlinks in dem auf die Datendienstinformation hinweisenden Hinweissignal eine entsprechende Browser-Applikation gestartet werden.

Es ist möglich, das Anfordern von Datendienstinformationen bei dem Mobilfunkanbieter in Zeiten niedriger Netzauslastung durchzuführen. Dadurch ist eine für die Datenübertragung benötigte Datenübertragungsrate gewährleistet. Gleichzeitig kann der Mobilfunkanbieter auf diese Weise einer übermäßigen Belastung des Netzes entgegenwirken. Hierzu ist die Konfigurationsapplikation eingerichtet, bei dem Mobilfunkanbieter durch eine entsprechende Anfrage Zeiten niedriger Netzauslastung zu erfragen und daraufhin Datendienstinformationen in den erfragten Zeiten niedriger Netzauslastung anzufordern. Es ist auch möglich, dass die Mobilfunkkarte allgemeine Uhrzeit- und Ortsinformationen von dem Mobilfunkanbieter erfragt und daraus selbst Zeiten niedriger Netzauslastung, beispielsweise während der Nachtstunden an dem entsprechenden Ort, errechnet.

Umfasst das Telekommunikationsendgerät gleichfalls einen Prozessor und einen Speicher, in welchem auf dem Prozessor lauffähige Applikationen gespeichert werden können, so ist es möglich, die Konfiguration des Datendienstes durch Zusammenwirken der Konfigurationsapplikation auf der Mobilfunkkarte und einer in dem Speicher des Telekommunikationsendgeräts gespeicherten und auf dem Prozessor des Telekommunikationsendgeräts lauffähigen Konfigurationshilfsapplikation durchzuführen. Die Konfigurationshilfsapplikation kann beispielsweise über ein Java Midlet realisiert sein, aber auch Applikationen auf der Grundlage anderen Plattformen sind möglich. Die Konfigurationshilfsapplikation kann dabei beispielsweise das Anzeigen des Hinweissignals und das Anfordern der entsprechenden Datendienstinformation unterstützen.

Nachfolgend wird die Erfindung anhand der begleitenden Zeichnungen beispielhaft beschrieben. Darin zeigen:
- Figur 1: eine bevorzugte Ausführungsform eines erfindungsgemäßen portablen Datenträgers; und
- Figur 2: die Schritte einer bevorzugten Ausführungsform des erfindungsgemäßen Verfahrens.

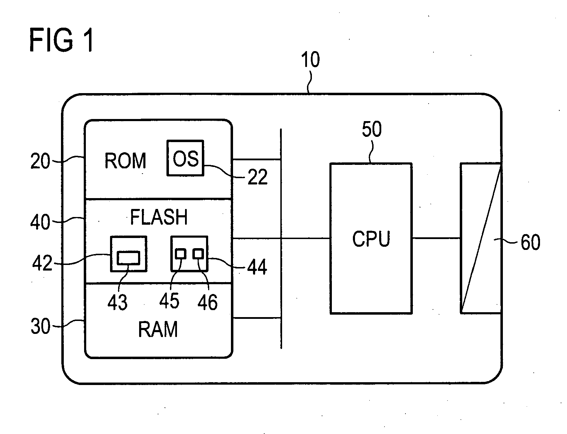

Mit Bezug auf Figur 1 umfasst ein portabler Datenträger 10 einen schnellen, nicht wiederbeschreibbaren, nichtflüchtigen ROM-Speicher 20, in dem beispielsweise der Kern eines Betriebssystems (OS) 22 gespeichert sein kann, welches den Datenträger 10 steuert, einen wiederbeschreibbaren, flüchtigen Arbeitsspeicher (RAM) 30 und einen nichtflüchtigen, wiederbeschreibbaren FLASH-Speicher 40. Der Speicher 40, der auch als EEPROM-Speicher oder dergleichen ausgebildet sein kann, umfasst Speicherbereiche 42 und 44. In dem Speicherbereich 44 können beispielsweise Applikationen, wie die nachstehend beschriebene Konfigurationsapplikation 45 und die Darstellungsapplikation 46 gespeichert sein, die auf einem Prozessor 50 des Datenträgers 10 ausführbar sind. In dem Speicherbereich 42 können beispielsweise Daten gespeichert sein, die von auf dem Prozessor 50 ausführbaren Applikationen erzeugt oder ausgelesen werden oder von außerhalb des Datenträgers 10 über eine Datenkommunikationsschnittstelle 60 zur Kommunikation des Datenträgers 10 mit einem externen Gerät in den Speicherbereich 42 eingebracht werden können, wie beispielsweise die nachstehend beschriebenen Darstellungselemente 43. Das Betriebssystem 22 steuert den Zugriff von auf dem Datenträger 10 ausgeführten Applikationen auf die Speicher 20, 30 und 40 und verwaltet sonstige Ressourcen, wie beispielsweise Rechenzeit der Applikationen auf dem Prozessor 50 und Zugriff auf die Datenkommunikationsschnittstelle 60.

Der portable Datenträger 10 kann beispielsweise als (U)SIM-Mobilfunkkarte ausgebildet sein, die in ein Telekommunikationsendgerät zu integrieren ist.

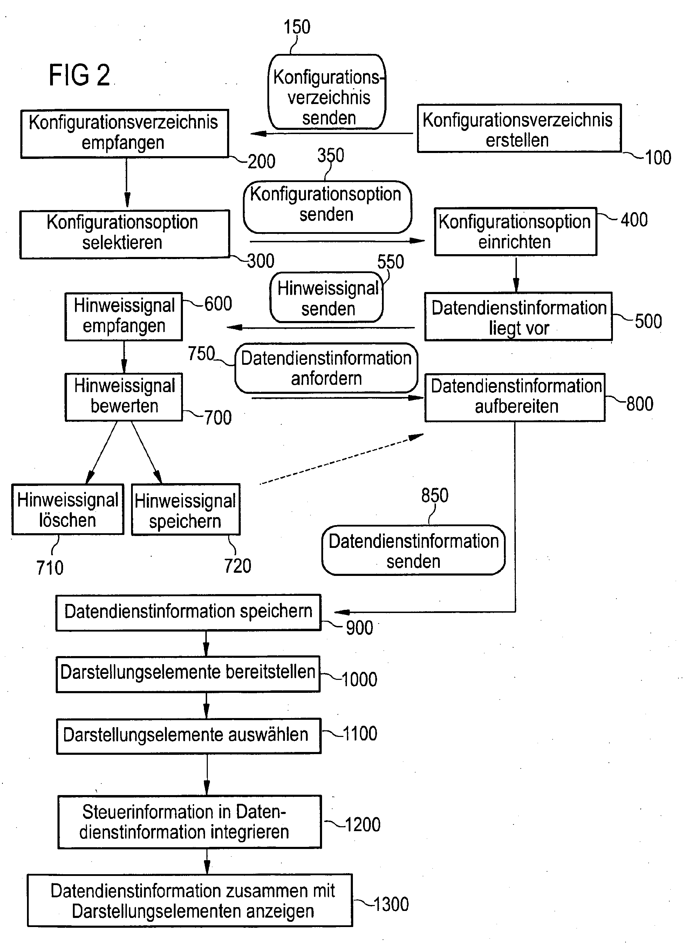

Mit Bezug auf Figur 2 wird nachstehend eine bevorzugte Ausführungsform eines Verfahrens zum Konfigurieren eines Datendienstes beschrieben. Der Datendienstanbieter kann beispielsweise ein Mobilfunkanbieter sein oder ein e-Mail-Provider. Der angebotene Datendienst kann darin bestehen, im Internet abonnierbare RSS- oder ATOM-Feeds zusammenzustellen, wie in Schritt 100 dargestellt (Konfigurationsverzeichnis erstellen), und, eventuell mit anbieterspezifischen Angeboten, einem Mobilfunknutzer eine solche Zusammenstellung von abonnierbaren Feeds zur Nutzung über ein Mobilfunknetz anzubieten. Im Fall eines e-Mail Providers als Datendienstanbieter kann als Datendienst ein e-Mail-Konto über ein Mobilfunknetz abgefragt werden. Andere Datendienstanbieter wie auch andere elektronische Datendienste unterschiedlichster Art liegen gleichfalls im Rahmen der Erfindung, unabhängig von dem Datendienstanbieter, der Art der Verbreitung des Datendienstes, den benutzten und unterstützen Technologien, den Inhalten und Datenformaten des Datendienstes und dergleichen. Kommerzielle, gemeinnützige oder private Datendienstanbieter können Datendienste gegen Bezahlung, Registrierung oder ohne jede Gegenleistung anbieten. Die Inhalte der angebotenen Datendienste können beliebige Themen betreffen, regelmäßig oder unregelmäßig aktualisiert werden und in verschiedenen Datenformaten, beispielsweise als Text-, Audio-, Video-Inhalte oder Kombinationen davon angeboten werden. Technologien zum Beziehen der Datendienste können bekannte Standardtechnologien, wie z.B. RSS oder ATOM, aber auch proprietäre Technologien umfassen.

Das Angebot, das als Konfigurationsverzeichnis bezeichnet wird und in Schritt 150 von einer Datendienstvorrichtung, beispielsweise einem Server eines Datendienstanbieters, an den Nutzer gesendet (Konfigurationsverzeichnis senden) und von dem Datenträger 10 in Schritt 200 mittels der Konfigurationsapplikation 45 empfangen wird (Konfigurationsverzeichnis empfangen), kann beispielsweise eine Liste von abonnierbaren RSS- oder ATOM-Feeds umfassen. Ein Datendienst kann beispielsweise Wettervorhersagen anbieten. Das Konfigurationsverzeichnis enthält dann z.B. als Konfigurationsoptionen auszuwählende Regionen, aus denen der Nutzer die Region als Konfigurationsoption auswählen kann, in der z.B. sein Wohnort liegt, um nachfolgend als Datendienst jeweils Wettervorhersagen seinen Wohnort und die Umgebung betreffend zu empfangen.

Ist das Angebot sehr groß und umfasst eine umfangreiche Sammlung von Feeds, die hierarchisch gegliedert sind, beispielsweise thematisch, spricht man von einem Selektionsverzeichnis. Der Nutzer kann durch aufeinander folgende Auswahl von Selektionsverzeichnisoptionen das für ihn relevante Themengebiet auswählen, indem er beispielsweise als Antwort auf eine an den Mobilfunkanbieter gesendete Selektionsverzeichnisoption ein neues Selektionsverzeichnis empfängt, um schließlich auch zu einem Konfigurationsverzeichnis, beispielsweise also einer Liste von abonnierbaren Feeds aus einem speziellen Themengebiet zu gelangen. Aus diesem Konfigurationsverzeichnis kann er dann für sich relevante Feeds mittels einer Konfigurationsoption zur Nutzung wie nachstehend beschrieben bei dem Anbieter des Datendienstes einrichten.

Ein Selektionsverzeichnis eines Nachrichtenanbieters kann beispielsweise die Selektionsverzeichnisoptionen "Politik", "Wirtschaft", "Kultur", "Sport", "Gesellschaft" enthalten. Nach Auswahl der Selektionsverzeichnisoption "Politik" empfängt die Konfigurationsapplikation 45 von der Datendienstvorrichtung beispielsweise ein weiteres Selektionsverzeichnis mit den Selektionsverzeichnisoptionen "Innenpolitik", "Außenpolitik", "Wirtschaftspolitik", "Sozialpolitik". Auf Auswahl der Selektionsverzeichnisoption "Innenpolitik" kann der Nutzer ein weiteres Selektionsverzeichnis empfangen. Dieser Prozess wiederholt sich gegebenenfalls, abhängig von der Tiefe des Datendienstangebots, noch mehrmals. Schließlich empfangt der Nutzer über die Konfigurationsapplikation 45 z.B. durch Wahl einer Konfigurationsverzeichnisoption "Parteien" ein Konfigurationsverzeichnis, in welchem er z.B. die Konfigurationsoption "CDU/CSU" auswählt, um nachfolgend zu diesem Themengebiet Datendienstinformationen wie nachstehend beschrieben nutzen zu können.

Konfigurations- und Selektionsverzeichnisse sind von dem jeweiligen Anbieter veränderbar, in Abhängigkeit von den angebotenen Datendiensten. Veränderte oder aktualisierte Konfigurations- oder Selektionsverzeichnisse können der Konfigurationsapplikation 45 auf dem portablen Datenträger 10 erneut zugesendet werden.

Das Einrichten der in Schritt 300 selektierten Konfigurätionsoption (Konfigurationsoption selektieren) wird durch die Konfigurationsapplikation 45 durchgeführt, indem die selektierte Option in Schritt 350 an den Datendienstanbieter gesendet wird (Konfigurationsoption senden). Aus der Liste der abonnierbaren RSS-Feeds wird beispielsweise ein Feed selektiert und dessen Name als Konfigurationsoption an den Mobilfunkanbieter gesendet. Die Konfigurations- und Selektionsverzeichnisse wie auch die selektierten Konfigurations- und Selektionsoptionen können zwischen dem portablen Datenträger 10 und dem Mobilfunkanbieter beispielsweise via SMS übertragen werden. Eine Auswahl der Konfigurations- oder Selektionsverzeichnisoptionen kann beispielsweise mittels eines durch die Konfigurationsapplikation 45 oder die nachfolgend beschriebene Konfigurationshilfsapplikation bereitgestellten Optionsmenüs erfolgen. Der Nutzer kann damit durch ein empfangenes Konfigurations- oder Selektionsverzeichnis "scrollen" und die entsprechende Option direkt auswählen.

Andere Übertragungsdienste sind gleichfalls möglich. Im Beispiel der e-Mail-Konten-Abfrage empfängt der Nutzer beispielsweise eine Liste von Einträgen, die die Betreff-Zeilen und Absender von zuletzt in dem Konto eingegangen e-Mails umfassen. Dazu ist es notwendig, dass der Nutzer seine Konto-Zugangsdaten in einem dem Schritt 150 vorgelagerten Schritt, vorzugsweise verschlüsselt, an den e-Mail-Provider sendet.

Hat der Nutzer nun aus dem Angebot, beispielsweise der Liste abonnierbarer RSS- oder ATOM-Feeds, den oder die Feeds selektiert, die für ihn relevant sind und die Konfigurationsoption an den Mobilfunkanbieter gesendet, wird diese selektierte Konfigurationsoption bei dem Mobilfunkanbieter für den Datenträger in Schritt 400 eingerichtet (Konfigurationsoption einrichten). Die Konfigurationsapplikation 45 kann eine eingerichtete Konfigurationsoption jederzeit widerrufen, indem sie ein Widerrufssignal an den Mobilfunkanbieter sendet. Auf diese Weise wird die eingerichtete Konfigurationsoption für den Datenträger bei dem Datendienstanbieter wieder aufgehoben. Dadurch können beispielsweise einmal abonnierte RSS-Feeds wieder abbestellt werden.

Zu einem selektierten und eingerichteten Datendienst, beispielsweise also einem RSS-Feed, erhält der Nutzer immer dann, wenn dem Mobilfunkanbieter, wie in Schritt 500 illustriert, eine neue Information zu diesem Feed vorliegt (Datendienstinformation liegt vor), also beispielsweise ein neuer Beitrag in dem Feed, ein Hinweissignal von dem Mobilfunkanbieter. Ein solches Hinweissignal kann aber auch in regelmäßigen Abständen oder erst bei Vorliegen mehrerer Datendienstinformationen gesendet werden. Vorzugsweise kann die Konfigurationsapplikation durch Senden einer weiteren Option an den Datendienstanbieter eine Einstellung vornehmen, die die Häufigkeit des Sendens eines Hinweissignals bei dem Mobilfunkanbieter vorgibt. Das Hinweissignal kann beispielsweise in Form einer Nachricht über SMS gesendet werden, die Information über den neuen Beitrag umfasst, beispielsweise den Titel, eine Kurzzusammenfassung des neuen Beitrags, dessen Autor/ Quelle und einen Hyperlink auf eine Internetadresse, an der der gesamte Beitrag oder Hintergrundinformation zu dem Beitrag erhalten werden kann. Im Fall der e-Mail-Anwendung erhält der Nutzer beispielsweise ein Hinweissignal, wenn eine neue Nachricht in seinem e-Mail-Konto eingegangen ist. Dieses von der Datendienstvorrichtung des Providers in Schritt 550 gesendete Hinweissignal (Hinweissignal senden) empfängt die Konfigurationsapplikation 45 des Datenträger 10 in Schritt 600 (Hinweissignal empfangen).

Die Konfigurationsapplikation 45 kann nun, abhängig von einer Bewertung des Hinweissignals in Schritt 700 (Hinweissignal bewerten), die Datendienstinformation, auf die das Hinweissignal hinweist, bei dem Datendienstanbieter in Schritt 750 anfordern (Datendienstinformation anfordern), entweder direkt oder später, oder gar nicht. Die Bewertung eines Hinweissignals kann anhand von durch die Konfigurationsapplikation 45 implementierten Regeln erfolgen. Diese Regeln können beispielsweise den Autor/die Quelle eines Beitrags betreffen, indem so genannte "Blacklists" und/ oder "Whitelists" implementiert sind, aufgrund derer Beiträge von in der jeweiligen Liste befindlicher Autoren immer abgelehnt, also nicht angefordert werden ("Blacklist"), bzw. immer angefordert werden ("Whitelist"). In dem Hinweissignal vorhandene Schlüsselwörter können in Bewertungsregeln Verwendung finden. Die Bewertungsregeln können als eine Art Filter eingesetzt werden, d.h. einige Datendienstinformationen werden aufgrund der Bewertung des entsprechenden Hinweissignals direkt angefordert bzw. das Hinweissignal direkt gelöscht. Es ist aber auch möglich, dass der Benutzer eine Bewertung eines Hinweissignals vornimmt, wenn z.B. die automatische Bewertung durch die Konfigurationsapplikation 45 keine eindeutige Bewertung ergeben hat, und eine Bewertung eines Hinweissignals der Konfigurationsapplikation 45 beispielsweise über eine Tastatur eines Telekommunikationsendgeräts oder über eine sprachgesteuerte Eingabe übergibt oder in den Speicher 40 des Datenträgers 10 einbringt.

Das Hinweissignal kann dementsprechend, abhängig von dem Resultat der Bewertung, in Schritt 710 gelöscht (Hinweissignal löschen) oder in Schritt 720 in dem Speicherbereich 42 des Speichers 40 des Datenträgers 10 gespeichert werden (Hinweissignal speichern), um ein späteres Anfordern der Datendienstinformation zu ermöglichen (durch den gestrichelten Pfeil angedeutet).

Auf Anforderung der Konfigurationsapplikation 45 bereitet der Mobilfunkanbieter die ihm vorliegende und der eingerichteten Konfigurationsoption entsprechende Datendienstinformation in Schritt 800 für den portablen Datenträger auf (Datendienstinformation aufbereiten). Beispielsweise wird ein Beitrag eines ansonsten im Internet über das http-Kommunikationsprotokoll beziehbaren RSS-Feeds so aufbereitet, dass er mittels SMS, MMS oder dergleichen an den portablen Datenträger 10 gesendet werden kann. Gleichfalls kann von einem e-Mail-Provider eine von der Konfigurationsapplikation 45 angeforderte, in dem e-Mail-Konto aufgelaufene e-Mail als Datendienstinformation geeignet zum Versenden aufbereitet werden. Es ist auch möglich, dass das Anfordern der Datendienstinformation über andere Kommunikationsprotokolle durchgeführt wird, beispielsweise über WAP oder http. Hierzu kann auf einem Telekommunikationsendgerät, in das der portable Datenträger 10 als (U)SIM-Mobilfunkkarte integriert ist, beispielsweise eine WAP- oder Internet-Browser-Applikation geöffnet werden, über welche die Konfigurationsapplikation 45 das Anfordern der Datendienstinformation, also z.B. eines RSS-Feed-Eintrags oder einer e-Mail, bewirkt, beispielsweise durch Folgen eines in dem Hinweissignal enthaltenen Hyperlinks.

Falls das Telekommunikationsendgerät selbst über einen Prozessor und einen Speicher verfügt, in dem auf dem Prozessor ausführbare Applikationen gespeichert sind, kann das Verfahren mittels einer Konfigurationshilfsapplikation, die auf dem Prozessor des Telekommunikationsendgeräts ausführbar ist, unterstützt werden, indem die Konfigurationshilfsapplikation mit der Konfigurationsapplikation 45 zusammenwirkt. Eine solche Konfigurationshilfsapplikation kann beispielsweise als Java Midlet implementiert sein. Implementationen unter anderen Plattformen sind gleichfalls möglich.

Die Konfigurationshilfsapplikation kann beispielsweise eine "Tickeranwendung" implementieren. Das von dem Mobilfunkanbieter in Schritt 600 empfangene Hinweissignal kann dadurch beispielsweise als ein über ein Display des Telekommunikationsendgeräts laufendes "aktives" Schriftband dargestellt werden. Die Konfigurationshilfsapplikation kann dann z.B. über die Programmierung eines geeigneten "Softkeys", ermöglichen, dass über ein Auswählen des "aktiven" Schriftbandes mittels des "Softkeys" ein Anfordern der entsprechenden Datendienstinformation initiiert wird. Die Kommunikation zwischen der Kommunikationshilfsapplikation und dem portablen Datenträger 10 kann über JSR (Java Specification Request) 177 stattfinden. Die Konfigurationshilfsapplikation kann z.B. steuern, dass in der Datendienstinformation enthaltene Inhalte, die nicht angezeigt werden können, da sie z.B. ausführbaren Code enthalten, direkt in dem Speicher 40 des portablen Datenträger 10 gespeichert werden. Dazu kann der Nutzer aufgefordert werden, eine Angabe eines Speicherortes auf dem Datenträger 10 anzugeben.

In Schritt 850 sendet der Datendienstanbieter die angeforderte Datendienstinformation an den portablen Datenträger 10 (Datendienstinformation senden). Die Konfigurationsapplikation 45 empfängt die gesendete Datendienstinformation und speichert diese in Schritt 900 in dem Speicherbereich 42 des Speichers 40 des Datenträgers 10 (Datendienstinformation speichern). Datendienstinformationen, die zum unmittelbaren Darstellen geeignet sind, können auch ohne gespeichert zu werden, direkt angezeigt werden, beispielsweise mittels eines Displays eines Telekommunikationsendgeräts, in welches der portable Datenträger als Mobilfunkkarte integriert ist.

Allgemein kann die Kommunikation zwischen dem jeweiligen Datendienstanbieter und dem Datenträger 10 verschlüsselt durchgeführt werden, entweder für mehrere Schritte des Verfahrens oder nur für die Übertragung der Datendienstinformation. Die Verschlüsselung kann beispielsweise mittels eines symmetrischen Verschlüsselungsverfahrens auf der Basis eines zuvor ausgetauschten geheimen Schlüssels oder mittels eines bei jedem Übertragungsvorgang neu ausgehandelten Sitzungsschlüssels durchgeführt werden.

Mit Bezug auf die Schritte 1000 bis 1300 wird ein Verfahren zum Darstellen von in dem Speicherbereich 42 des Speichers 40 des Datenträgers 10 gespeicherten Datendienstinformationen beschrieben.

Gespeicherte Datendienstinformationen, die Textinhalte umfassen und zum Anzeigen mittels einer Ausgabeeinrichtung vorgesehen sind, beispielsweise in Form von Beiträgen von RSS- oder ATOM-Feeds auf einem Display eines Telekommunikationsendgeräts, verfügen oft nur über reinen Textinhalt, je-doch nicht über Formatierung, graphische Inhalte und dergleichen.

In Schritt 1000 stellt die in dem Speicherbereich 44 des Speichers 40 des Datenträgers 10 gespeicherte und auf dem Prozessor 50 lauffähige Darstellungsapplikation 46 ergänzende Inhalte in Form von Darstellungselementen 43 bereit (Darstellungselemente bereitstellen). Diese Darstellungselemente 43 werden im Speicherbereich 42 gespeichert, vorzugsweise bevor der Datenträger 10 an den Nutzer ausgegeben wird. Die Darstellungselemente 43 können beispielsweise von einem Mobilfunkanbieter, der gleichzeitig auch Datendienstanbieter ist und als Mobilfunkkarten ausgebildete Datenträger 10 an Nutzer ausgibt, in den Speicher 40 des Datenträgers 10 eingebracht werden.

Es ist möglich, dass die Darstellungselemente 43 verändert oder aktualisiert werden, beispielsweise durch den Mobilfunkanbieter über die Luftschnittstelle (OTA). Die Darstellungselemente 43 können unterschiedliche Elemente repräsentieren: textuelle Inhalte, wie z.B. e-Mail-Adressen, Hyperlinks und dergleichen; graphische Elemente, wie z.B. Icons, Hintergrundbilder, Werbebanner und dergleichen; strukturierende Elemente, z.B. Frames, Hervorhebungen und dergleichen; oder multimediale Daten, wie z.B. Sounds, Audioelemente und dergleichen mehr. Jede Form von zu speichernden Inhalten, die geeignet sind, im Allgemeinen hauptsächlich in Textform gespeicherte Datendienstinformationen inhaltlich, strukturell, graphisch, akustisch und dergleichen für eine Darstellung beispielsweise auf einem Display (mit Lautsprecher) eines Telekommunikationsendgeräts oder dergleichen zu ergänzen, kann als Darstellungsinformation dienen.

Zu der in dem Speicher 40 gespeicherten Datendienstinformation, also z.B. ein Feed-Beitrag in Textform, werden in Schritt 1100 durch die Darstellungsapplikation 46 geeignete Darstellungselemente 43 aus der Gesamtheit aller Darstellungselemente ausgewählt (Darstellungselemente auswählen). Dies kann beispielsweise ein Rahmen sein, der um den Feed-Beitrag gelegt werden soll, oder eine e-Mail-Adresse, die zusätzlich zu dem Beitrag angezeigt werden soll, beispielsweise die e-Mail-Adresse des Autors des Beitrags, oder ein Hintergrundbild, vor dem die Datendienstinformation dargestellt werden soll. Die Auswahl der Darstellungselemente 43 durch die Darstellungsapplikation 46 kann von verschiedenen Parametern anhängig gemacht werden, beispielsweise der Art der Ausgabeeinrichtung, auf der die Datendienstinformation dargestellt werden soll, um eine optisch optimierte Darstellung zu erreichen. Der Inhalt und die Form der Datendienstinformation kann beachtet werden, um die Datendienstinformation strukturell und inhaltlich ergänzen zu können. Eine Abhängigkeit von Vorgaben des Datendienstanbieter, z.B. beim Hinzufügen von Werbebannern, oder des Nutzer des Datenträger, z.B. zur Darstellung der Datendienstinformation mittels bevorzugter Schrifttypen auf dem Display, kann bestehen. Schließlich dient eine Beachtung der Ressourcen des Datenträgers, wie z.B. Speicherkapazität und Prozessorleistung und dergleichen, dazu, eine schnelle Darstellung der Datendienstinformation in Verbindung mit den Darstellungselementen zu erlauben.

In Schritt 1200 wird durch die Darstellungsapplikation 46 von dieser erzeugte Steuerinformation in die darzustellenden Datendienstinformation integriert, die eine Anordnung der ausgewählten Darstellungselemente in Relation zu der Datendienstinformation auf der Ausgabeeinrichtung betrifft (Steuerinformation in Datendienstinformation integrieren). Die Steuerinformation kann also beispielsweise festlegen, wie der Rahmen um den Feed-Beitrag gelegt wird, wo eine hinzugefügte e-Mail-Adresse angeordnet wird, welcher Schriftart und -typ und -größe für die Textdarstellung in Verbindung mit dem ausgewählten Hintergrund verwendet werden und dergleichen. Die Steuerinformationen legen somit das Gesamterscheinungsbild der Darstellung der Datendienstinformation zusammen mit dem ausgewählten Darstellungselementen 43 fest, indem die ausgewählten Darstellungselemente 43 mittels der Steuerinformationen geeignet in Relation zu der Datendienstinformation angeordnet wird.

In Schritt 1300 wird die Datendienstinformation in Verbindung mit den Darstellungselementen 43, welche in Schritt 1100 ausgewählt worden sind und deren Anordnung in Relation zu der Datendienstinformation in Schritt 1200 mit Hilfe der Steuerinformation festlegt worden ist, mittels einer geeigneten Ausgabeeinrichtung, beispielsweise einem Display eines Telekommunikationsendgeräts, dargestellt (Datendienstinformation zusammen mit Darstellungselementen anzeigen). Auf diese Weise wird z.B. ein reiner Textbeitrag mittels Darstellungselementen 43 strukturierend aufbereitet, indem beispielsweise unterschiedliche Rahmen ausgewählt werden, in welchen verschiedene Teile der Datendienstinformation, teils eventuell zusätzlich hervorgehoben, dargestellt werden. Graphische Elemente, wie beispielsweise Icons oder Hintergrundbilder können die Datendienstinformation optisch aufwerten und dadurch die Darstellung verbessern. Zusätzliche Informationselemente, wie z.B. Hyperlinks zu den Beitrag betreffenden Themen, erganzen die Datendienstinformation inhaltlich. Abhängig von dem Inhalt der Datendienstinformation, der von der Darstellungsapplikation beispielsweise über eine Schlüsselwortsuche bestimmt werden kann, kann als Darstellungselement 43 kontextabhängige Werbung in Form eines Werbebanners zur Darstellung der Datendienstinformation ergänzt werden.

## Patentansprüche

1. Verfahren auf einem portablen Datenträger (10) zum Konfigurieren eines von einem Datendienstanbieter angebotenen Datendienstes, umfassend die Schritte:
- Empfangen (200) eines von dem Datendienstanbieter gesendeten Konfigurationsverzeichnisses, das den Datendienst betreffende Konfigurationsoptionen umfasst, durch den portablen Datenträger (10);
- Selektieren (300) einer Konfigurationsoption aus dem Konfigurationsverzeichnis durch den portablen Datenträger (10);
- Einrichten (400) der selektierten Konfigurationsoption für den Datendienst bei dem Datendienstanbieter durch Senden (350) der selektierten Konfigurationsoption von dem portablen Datenträger (10) an den Datendienstanbieter;
- Empfangen (600;850) einer der eingerichteten Konfigurationsoption entsprechende Datendienstinformation oder eines Hinweissignals durch den portablen Datenträger (10), welches eine dem Datendienstanbieter vorliegende und der eingerichteten Konfigurationsoption entsprechende Datendienstinformation betrifft, durch den portablen Datenträger.

2. Verfahren nach Anspruch 1, **gekennzeichnet durch**
Anfordern (750) der Datendienstinformation bei dem Datendienstanbieter in Abhängigkeit von einer Bewertung (700) des Hinweissignals **durch** den portablen Datenträger.

3. Verfahren nach Anspruch 1 oder 2, **gekennzeichnet durch** die folgenden Schritte vor dem Empfangen des Konfigurationsverzeichnisses:
- Empfangen von zumindest einem von dem Datendienstanbieter gesendeten Selektionsverzeichnis **durch** den portablen Datenträger (10), wobei das Selektionsverzeichnis entweder Konfigurationsverzeichnisoptionen, die bei dem Datendienstanbieter vorliegende Konfigurationsverzeichnisse betreffen, oder Selektionsverzeichnisoptionen, die bei dem Datendienstanbieter vorliegende weitere Selektionsverzeichnisse betreffen, umfasst,
und entweder, für den Fall, dass das empfangene Selektionsverzeichnis Konfigurationsverzeichnisoptionen umfasst, **durch** die weiteren Schritte:
- Selektieren einer Konfigurationsverzeichnisoption **durch** den portablen Datenträger (10) und Senden der selektierten Konfigurationsverzeichnisoption an den Datendienstanbieter; und
- Empfangen des die selektierte Konfigurationsverzeichnisoption betreffenden Konfigurationsverzeichnisses von dem Datendienstanbieter; oder, für den Fall, dass das empfangene Selektionsverzeichnis Selektionsverzeichnisoptionen umfasst, **durch** die weiteren Schritte:
- Selektieren einer Selektionsverzeichnisoption **durch** den portablen Datenträger (10) und Senden der selektierten Selektionsverzeichnisoption an den Datendienstanbieter; und
- Empfangen eines die selektierte Selektionsverzeichnisoption betreffenden weiteren Selektionsverzeichnisses von dem Datendienstanbieter.

4. Verfahren nach Anspruch 1, 2 oder 3, **gekennzeichnet durch** ein Senden eines Widerrufssignals von dem portablen Datenträger (10) an den Datendienstanbieter, wodurch eine für den Datendienst bei dem Datendienstanbieter eingerichtete Konfigurationsoption wieder aufgehoben wird.

5. Verfahren nach einem der Ansprüche 1 bis 4, **dadurch gekennzeichnet, dass** das Konfigurationsverzeichnis und/oder das Selektionsverzeichnis von dem Datendienstanbieter verändert wird.

6. Verfahren nach einem der Ansprüche 1 bis 5, **dadurch gekennzeichnet, dass** der Datenträger (10) das Hinweissignal, das eine dem Datendienstanbieter vorliegende und der eingerichteten Konfigurationsoption entsprechende Datendienstinformation betrifft, in regelmäßigen Abständen empfängt.

7. Verfahren nach einem der Ansprüche 1 bis 6, **dadurch gekennzeichnet, dass** das Hinweissignal, das eine dem Datendienstanbieter vorliegende und der eingerichteten Konfigurationsoption entsprechende Datendienstinformation betrifft, und/oder die entsprechende Datendienstinformation auf dem Datenträger (10) gespeichert wird.

8. Verfahren nach einem der Ansprüche 1 bis 7, **dadurch gekennzeichnet, dass** der Datenträger (10) von dem Datendienstanbieter verschlüsselt empfangene Daten entschlüsselt und Daten verschlüsselt an den Datendienstanbieter sendet.

9. Verfahren nach einem der Ansprüche 1 bis 8, **dadurch gekennzeichnet, dass** der Datendienstanbieter ein Mobilfunkanbieter ist und das Verfahren auf einer (U)SIM-Mobilfunkkarte als portablem Datenträger (10) ausgeführt wird.

10. Verfahren nach Anspruch 9, **dadurch gekennzeichnet, dass** der Datenträger (10) ein Konfigurationsverzeichnis und/oder ein Selektionsverzeichnis und/ oder ein Hinweissignal auf eine dem Datendienstanbieter vorliegende und der bei dem Datendienstanbieter eingerichteten Konfigurationsoption entsprechende Datendienstinformation mittels SMS von dem Datendienstanbieter empfängt und eine selektierte Konfigurationsoption und/oder eine selektierte Konfigurationsverzeichnisoption und/ oder eine selektierte Selektionsverzeichnisoption und/oder ein Widerrufssignal mittels SMS an den Datendienstanbieter sendet.

11. Verfahren nach Anspruch 9 oder 10, **dadurch gekennzeichnet, dass** der Datenträger (10) die Datendienstinformation über das WAP- oder das http-Kommunikationsprotokoll anfordert.

12. Verfahren nach einem der Ansprüche 9 bis 11, **dadurch gekennzeichnet, dass** der Schritt des Anforderns der Datendienstinformation folgende Schritte umfasst:
- Erfragen eines Zeitraums niedriger Netzauslastung durch den Datenträger (10) bei dem Datendienstanbieter;
- Anfordern der Datendienstinformation in dem erfragten Zeitraum niedriger Netzauslastung.

13. Verfahren nach einem der Ansprüche 1 bis 12, **dadurch gekennzeichnet, dass** das Verfahren zum Konfigurieren eines RSS- und/oder ATOM-Datendienstes durchgeführt wird und als Konfigurationsverzeichnis eine Liste von auswählbaren Themen, insbesondere beziehbare RSS- und/oder ATOM-Feeds, von dem Datendienstanbieter empfangen wird.

14. Verfahren nach einem der Ansprüche 1 bis 13, **dadurch gekennzeichnet, dass** die Bewertung des Hinweissignals von einem Benutzer des portablen Datenträgers (10) vorgenommen wird.

15. Verfahren auf einem portablen Datenträger (10) zum Darstellen einer Datendienstinformation, die insbesondere über einen nach einem der Ansprüche 1 bis 14 konfigurierten Datendienst eines Datendienstanbieters von einer Datendienstvorrichtung empfangen wurde, mittels einer Ausgabeeinrichtung, umfassend die Schritte:
- Auswählen von in einem Speicher (40) des Datenträgers (10) gespeicherten Darstellungselementen (43), um die ausgewählten Darstellungselemente (43) zusammen mit der Datendienstinformation auf einer Ausgabeeinrichtung darzustellen;
- Integrieren von Steuerinformation in die darzustellende Datendienstinformation, die eine Anordnung der ausgewählten Darstellungselemente (43) in Relation zu der Datendienstinformation auf der Ausgabeeinrichtung betrifft; und
- Darstellen der Datendienstinformation zusammen mit den ausgewählten Darstellungselementen (43) in der durch die Steuerinformation vorgegebenen Weise mittels der Ausgabeeinrichtung.

16. Verfahren nach Anspruch 15, **dadurch gekennzeichnet, dass** die Auswahl der Darstellungselemente (43) und die Integration der Steuerinformation in die Datendienstinformation in Abhängigkeit von der Ausgabeeinrichtung und/oder der Art der Datendienstinformation und/oder von Vorgaben des Datendienstanbieters und/oder von Vorgaben eines Benutzers des Datenträgers und/ oder von Vorgaben des Datenträgers (10) durchgeführt wird.

17. Verfahren nach Anspruch 15 oder 16, **dadurch gekennzeichnet, dass** als ausgewählte Darstellungselemente (43) audiovisuelle Informationen zusammen mit der Datendienstinformation mittels der Ausgabeeinrichtung dargestellt werden.

18. Portabler Datenträger (10), umfassend einen Speicher (40), einen Prozessor (50) und eine Datenkommunikationsschnittstelle (60) zur Kommunikation mit einer Datendienstvorrichtung eines einen Datendienst anbietenden Datendienstanbieters sowie eine in dem Speicher (40) gespeicherte und auf dem Prozessor (50) ausführbare Konfigurationsapplikation (45), die eingerichtet ist:
- ein von der Datendienstvorrichtung gesendetes Konfigurationsverzeichnis über die Datenkommunikationsschnittstelle (60) zu empfangen, das den Datendienst betreffende Konfigurationsoptionen umfasst;
- eine Konfigurationsoption aus dem Konfigurationsverzeichnis zu selektieren;
- die selektierte Konfigurationsoption über die Datenkommunikatiönsschnittstelle (60) an die Datendienstvorrichtung zu senden, um die selektierte Konfigurationsoption für den Datendienst bei dem Datendienstanbieter einzurichten;
- ein Hinweissignal von der Datendienstvorrichtung über die Datenkommunikationsschnittstelle (60) zu empfangen, welches eine dem Datendienstanbieter vorliegende und der eingerichteten Konfigurationsoption entsprechende Datendienstinformation betrifft; und
- die Datendienstinformation bei dem Datendienstanbieter mittels eines über die Datenkommunikationsschnittstelle (60) an die Datendienstvorrichtung gesendeten Anforderungssignals in Abhängigkeit von einer Bewertung des Hinweissignals anzufordern.

19. Portabler Datenträger (10) nach Anspruch 18, **dadurch gekennzeichnet, dass** die Konfigurationsapplikation (45) eingerichtet ist:
- zumindest ein von der Datendienstvorrichtung gesendetes Selektionsverzeichnis, welches entweder Konfigurationsverzeichnisoptionen, die bei dem Datendienstanbieter vorliegende Konfigurationsverzeichnisse betreffen, oder Selektionsverzeichnisoptionen, die bei dem Datendienstanbieter vorliegende weitere Selektionsverzeichnisse betreffen, umfasst, über die Datenkommunikationsschnittstelle (60) zu empfangen;
- eine Konfigurationsverzeichnisoption oder Selektionsverzeichnisoption aus dem Selektionsverzeichnis zu selektieren und die selektierte Konfigurationsverzeichnisoption oder Selektionsverzeichnisoption über die Datenkommunikationsschnittstelle (60) an die Datendienstvorrichtung zu senden; und
- von der Datendienstvorrichtung ein die selektierte Konfigurationsverzeichnisoption betreffendes Konfigurationsverzeichnis oder ein die selektierte Selektionsverzeichnisoption betreffendes weiteres Selektionsverzeichnis über die Datenkommunikationsschnittstelle (60) zu empfangen.

20. Portabler Datenträger (10) nach Anspruch 18 oder 19, **dadurch gekennzeichnet, dass** die Konfigurationsapplikation (45) eingerichtet ist, über die Datenkommunikationsschnittstelle (60) ein Widerrufssignal an die Datendienstvorrichtung zu senden, um eine für den Datendienst bei dem Datendienstanbieter eingerichtete Konfigurationsoption wieder aufzuheben.

21. Portabler Datenträger (10) nach einem der Ansprüche 18 bis 20, **dadurch gekennzeichnet, dass** die Konfigurationsapplikation (45) eingerichtet ist, das Hinweissignal, das eine dem Datendienstanbieter vorliegende und der eingerichteten Konfigurationsoption entsprechende Datendienstinformationen betrifft, in regelmäßigen Abständen von der Datendienstvorrichtung über die Datenkommunikationsschnittstelle (60) zu empfangen.

22. Portabler Datenträger (10) nach einem der Ansprüche 18 bis 21, **dadurch gekennzeichnet, dass** die Konfigurationsapplikation (45) eingerichtet ist, das Hinweissignal, das eine dem Datendienstanbieter vorliegende und der eingerichteten Konfigurationsoption entsprechende Datendienstinformation betrifft, und/ oder die entsprechende Datendienstinformation in dem Speicher (40) zu speichern.

23. Portabler Datenträger (10) nach einem der Ansprüche 18 bis 22, **dadurch gekennzeichnet, dass** die Konfigurationsapplikation (45) eingerichtet ist, verschlüsselte Daten des Datendienstanbieters von der Datendienstvorrichtung über die Datenkommunikationsschnittstelle (60) zu empfangen und diese zu entschlüsseln und Daten für den Datendienstanbieter zu verschlüsseln und die verschlüsselten Daten über die Datenkommunikationsschnittstelle (60) an die Datendienstvorrichtung zu senden.

24. Portabler Datenträger (10) nach einem der Ansprüche 18 bis 23, **dadurch gekennzeichnet, dass** die Konfigurationsapplikation (45) eingerichtet ist, einen RSS- und/oder ATOM-Datendienst bei dem Datendienstanbieter zu konfigurieren, und als Konfigurationsverzeichnis eine Liste von auswählbaren Themen, insbesondere beziehbare RSS- und/oder ATOM-Feeds, von der Datendienstvorrichtung zu empfangen.

25. Portabler Datenträger (10) nach einem der Ansprüche 18 bis 24, **dadurch gekennzeichnet, dass** die Konfigurationsapplikation (45) eingerichtet ist, die Bewertung des Hinweissignals über die Datenkommunikationsschnittstelle (60) von einer externen Eingabevorrichtung zu empfangen.

26. Portabler Datenträger (10) nach einem der Ansprüche 18 bis 25, **gekennzeichnet durch** in dem Speicher (40) gespeicherte Darstellungselemente (43) und eine in dem Speicher (40) gespeicherte und auf dem Prozessor ausführbare Darstellungsapplikation (46) zur Darstellung einer in dem Speicher (40) gespeicherten Datendienstinformation mittels einer Ausgabeeinrichtung, wobei die Darstellungsapplikation (46) eingerichtet ist,
- Darstellungselemente (43) aus den gespeicherten Darstellungselementen (43) zur Darstellung zusammen mit der Datendienstinformation auf der Ausgabeeinrichtung auszuwählen;
- in die Datendienstinformation Steuerinformation zu integrieren, die eine Anordnung der ausgewählten Darstellungselemente (43) in Relation zu der Datendienstinformation auf der Ausgabeeinrichtung betrifft; und
- die Datendienstinformation zusammen mit den ausgewählten Darstellungselementen (43) in der **durch** die Steuerinformation vorgegebenen Weise mittels der Ausgabeeinrichtung darzustellen.

27. Portabler Datenträger (10) nach Anspruch 26, **dadurch gekennzeichnet, dass** die Darstellungsapplikation (46) eingerichtet ist, die Auswahl der Darstellungselemente (43) und die Integration der Steuerinformation in die Datendienstinformation in Abhängigkeit von der Ausgabeeinrichtung und/oder der Art der Datendienstinformation und/oder von Vorgaben des Datendienstanbieters und/ oder von Vorgaben eines Benutzers des Datenträgers und/oder von Vorgaben des Datenträgers durchzuführen.

28. Portabler Datenträger (10) nach Anspruch 26 oder 27, **dadurch gekennzeichnet, dass** die Darstellungsapplikation (46) eingerichtet ist, die Datendienstinformation zusammen mit audiovisuellen Informationen als ausgewählte Darstellungselemente (43) mittels der Ausgabeeinrichtung darzustellen.

29. Portabler Datenträger (10) nach einem der Ansprüche 26 bis 28, **dadurch gekennzeichnet, dass** die Darstellungsapplikation (46) eingerichtet ist, die Darstellung der Datendienstinformation zusammen mit den ausgewählten Darstellungselementen (43) über die Datenkommunikationsschnittstelle (60) auf einer Ausgabeeinrichtung eines Telekommunikationsendgeräts zu bewirken, mit welchem der Datenträger (10) verbindbar ist.

30. Portabler Datenträger (10) nach einem der Ansprüche 18 bis 29, **dadurch gekennzeichnet, dass** der portable Datenträger (10) eine (U)SIM-Mobilfunkkarte ist und die Konfigurationseinrichtung (45) eingerichtet ist, mit einer Datendienstvorrichtung eines Mobilfunkanbieters als Datendienstanbieter zu kommunizieren.

31. Portabler Datenträger (10) nach Anspruch 30, **dadurch gekennzeichnet, dass** die Konfigurationsapplikation (45) eingerichtet ist, das Konfigurationsverzeichnis und/oder das Selektionsverzeichnis und/oder das Hinweissignal auf eine dem Datendienstanbieter vorliegende und der bei dem Datendienstanbieter eingerichteten Konfigurationsoption entsprechende Datendienstinformation mittels SMS über die Datenkommunikationsschnittstelle (60) von der Datendienstvorrichtung zu empfangen und eine selektierte Konfigurationsoption und/ oder eine selektierte Konfigurationsverzeichnisoption und/ oder eine selektierte Selektionsverzeichnisoption und/ oder ein Widerrufssignal mittels SMS über die Datenkommunikationsschnittstelle (60) an die Datendienstvorrichtung zu senden.

32. Portabler Datenträger (10) nach Anspruch 30 oder 31, **dadurch gekennzeichnet, dass** die Konfigurationsapplikation (45) eingerichtet ist, das Anforderungssignal für die Datendienstinformation über das WAP- oder das http-Kommunikationsprotokoll an die Datendienstvorrichtung zu senden.

33. Portabler Datenträger (10) nach einem der Ansprüche 30 bis 32, **dadurch gekennzeichnet, dass** die Konfigurationsapplikation (45) eingerichtet ist, zum Senden des Anforderungssignals an die Datendienstvorrichtung:
- eine Netzauslastungsanfrage zum Erfragen eines Zeitraums niedriger Netzauslastung an die Datendienstvorrichtung über die Datenkommunikationsschnittstelle (60) zu senden und eine Netzauslastungsantwort, die einen Zeitraum niedriger Netzauslastung betrifft, von der Datendienstvorrichtung als Antwort auf die Netzauslastungsanfrage von der Datendienstvorrichtung zu empfangen; und
- das Anforderungssignal zum Anfordern der Datendienstinformation in einem Zeitraum niedriger Netzauslastung an die Datendienstvorrichtung zu senden.

34. Portabler Datenträger (10) nach einem der Ansprüche 30 bis 33, **dadurch gekennzeichnet, dass** die Konfigurationsapplikation (45) eingerichtet ist, die Bewertung des Hinweissignals über die Datenkommunikationsschnittstelle (60) von einer Eingabevorrichtung eines Telekommunikationsendgeräts zu empfangen, in welches der Datenträger integriert ist

35. System, umfassend ein Telekommunikationsendgerät mit einem Prozessor und einem Speicher sowie einer in dem Speicher gespeicherten und auf dem Prozessor ausführbaren Konfigurationshilfsapplikation, sowie einen portablen Datenträger (10) nach einem der Ansprüche 30 bis 34, der mit dem Telekommunikationsendgerät verbunden ist, wobei der portable Datenträger (10) eingerichtet ist, ein Verfahren nach einem der Ansprüche 1 bis 17 durchzuführen, **dadurch gekennzeichnet, dass** die Konfigurationshilfsapplikation weiterhin eingerichtet ist, zum Konfigurieren des Datendienstes mit der Konfigurationsapplikation (45) des portablen Datenträgers (10) zusammenzuwirken.

36. Verfahren auf einem portablen Datenträger (10) zum Darstellen einer Datendienstinformation mittels einer Ausgabeeinrichtung, wobei die Datendienstinformation aufgrund einer Anforderung des Datenträgers (10) an einen von einem Datendienstanbieter angebotenen Datendienst von einer Datendienstvorrichtung empfangen wurde, umfassend die Schritte:
- Bereitstellen von Darstellungselementen (43) in einem Speicher (40) des Datenträgers (10);
- Auswählen von Darstellungselemente (43) aus den gespeicherten Darstellungselementen (43), um die ausgewählten Darstellungselemente (43) zusammen mit der Datendienstinformation auf der Ausgabeeinrichtung darzustellen;
- Integrieren von Steuerinformation in die darzustellende Datendienstinformation, die eine Anordnung der ausgewählten Darstellungselemente (43) in Relation zu der Datendienstinformation auf der Ausgabeeinrichtung betrifft; und
- Darstellen der Datendienstinformation zusammen mit den ausgewählten Darstellungselementen (43) in der durch die Steuerinformation vorgegebenen Weise mittels der Ausgabeeinrichtung.

37. Verfahren nach Anspruch 36, **dadurch gekennzeichnet, dass** die Auswahl der Darstellungselemente (43) und die Integration der Steuerinformation in die Datendienstinformation in Abhängigkeit von der Ausgabeeinrichtung und/ oder der Art der Datendienstinformation und/oder von Vorgaben des Datendienstanbieters und/oder von Vorgaben eines Benutzers des Datenträgers und/oder von Vorgaben des Datenträgers (10) durchgeführt wird.

38. Verfahren nach Anspruch 36 oder 37, **dadurch gekennzeichnet, dass** als ausgewählte Darstellungselemente (43) audiovisuelle Informationen zusammen mit der Datendienstinformation mittels der Ausgabeeinrichtung dargestellt werden.

39. Verfahren nach einem der Ansprüche 36 bis 39, **dadurch gekennzeichnet, dass** die Datendienstinformation zusammen mit den ausgewählten Darstellungselementen (43) auf einer Ausgabeeinrichtung eines Telekommunikationsendgeräts dargestellt wird, welches mit dem Datenträger (10) verbunden ist.

40. Portabler Datenträger (10), umfassend einen Speicher (40), in dem Darstellungselemente (43) gespeichert sind, einen Prozessor (50), eine Datenkommunikationsschnittstelle (60) zum Empfangen einer von dem Datenträger angeforderten Datendienstinformation von einer Datendienstvorrichtung eines einen Datendienst anbietenden Datendienstanbieters, sowie eine in dem Speicher (40) gespeicherte und auf dem Prozessor (50) ausführbare Darstellungsapplikation (46), die eingerichtet ist:
- Darstellungselemente (43) aus den gespeicherten Darstellungselementen (43) zur Darstellung zusammen mit der Datendienstinformation auf einer Ausgabeeinrichtung auszuwählen;
- in die Datendienstinformation Steuerinformation zu integrieren, die eine Anordnung der ausgewählten Darstellungselemente (43) in Relation zu der Datendienstinformation auf der Ausgabeeinrichtung betrifft; und
- die Datendienstinformation zusammen mit den ausgewählten Darstellungselementen (43) in der durch die Steuerinformation vorgegebenen Weise über die Datenkommunikationsschnittstelle (60) auf der Ausgabeeinrichtung darzustellen.

41. Portabler Datenträger (10) nach Anspruch 40, **dadurch gekennzeichnet, dass** die Darstellungsapplikation (46) eingerichtet ist, die Auswahl der Darstellungselemente (43) und die Integration der Steuerinformation in die Datendienstinformation in Abhängigkeit von der Ausgabeeinrichtung und/oder der Art der Datendienstinformation und/ oder von Vorgaben des Datendienstanbieters und/oder von Vorgaben eines Benutzers des Datenträgers und/oder von Vorgaben des Datenträgers (10) durchzuführen.

42. Portabler Datenträger (10) nach Anspruch 40 oder 41, **dadurch gekennzeichnet, dass** die Darstellungsapplikation (46) eingerichtet ist, die Datendienstinformation zusammen mit audiovisuellen Informationen als ausgewählte Darstellungselemente (43) mittels der Ausgabeeinrichtung darzustellen.

43. Portabler Datenträger (10) nach einem der Ansprüche 40 bis 42, **dadurch gekennzeichnet, dass** die Darstellungsapplikation (46) eingerichtet ist, die Darstellung der Datendienstinformation zusammen mit den ausgewählten Darstellungselementen (43) über die Datenkommunikationsschnittstelle (60) auf einer Ausgabeeinrichtung eines Telekommunikationsendgeräts zu bewirken, mit welchem der Datenträger (10) verbindbar ist.
